# EUROPÄISCHE PATENTSCHRIFT

(11) **EP 1 446 859 B1**
(45) Veröffentlichungstag und Bekanntmachung des Hinweises auf die Patenterteilung: **24.02.2010**
(21) Anmeldenummer: 02782746.8
(22) Anmeldetag: 23.10.2002
(51) Int. Cl.: H02K 1/22

(54) **KLAUENPOLLÄUFER UND DESSEN HERSTELLVERFAHREN**
CLAW-POLE ROTOR AND PRODUCTION METHOD THEREFOR
ROTOR A POLES A GRIFFES ET SON PROCEDE DE PRODUCTION

(30) Priorität: 09.11.2001 DE 10155223
(43) Veröffentlichungstag der Anmeldung: 18.08.2004
(73) Patentinhaber: ROBERT BOSCH GMBH, 70442 Stuttgart (DE)
(72) Erfinder: PFLUEGER, Gerhard, 71706 Markgroeningen (DE)
(86) Internationale Anmeldenummer: PCT/DE2002/003992
(87) Internationale Veröffentlichungsnummer: WO 2003/041242

(56) Entgegenhaltungen:
- DE-A- 19 939 808
- DE-A- 19 951 115

## Beschreibung

### Stand der Technik

Die Erfindung betrifft eine elektrische Maschine, insbesondere einen Drehstromgenerator für Kraftfahrzeuge nach dem Oberbegriff des Anspruchs 1 sowie ein Verfahren zur Herstellung einer solchen Maschine nach dem Oberbegriff des Anspruchs 6.

Eine elektrische Maschine dieser Art ist aus der DE 199 39 808 A1 bekannt. Dabei sind die Permanentmagnete in den Freiräumen zwischen den ineinandergreifenden Klauenpolfingern in einem Haltering eingesetzt, welcher die im Betrieb der Maschine an den Permanentmagneten auftretenden Zentrifugalkräfte aufnimmt. Der Haltering ist dabei an seinen axialen Abschnitten beidseitig mit den dort angrenzenden Klauenpolfingern verschweisst.

Eine solche Lösung hat im Beispielsfalle eines sogenannten Leitstüchläufers den Vorteil, dass durch die Verschweissung des Halteringes das freie Klauenpol-Leitstück mit der auf der Läuferwelle sitzenden Klauenpol-Platine einen festen Verbund bildet, so dass ein bisher verwendeter Verbundring entfallen kann. Da bei sogenannten Schleifringläufern üblicherweise beide Klauenpole auf der Läuferwelle befestigt sind, ist dort ein fester Verbund nicht erforderlich.

Er hat vielmehr den Nachteil, dass für dien Schweissverbindungen zwischen Haltering und Klauenpolfinger ein besonderer Arbeitsgang an einer zusätzlichen Bearbeitungsstation erforderlich ist.

Mit der vorliegenden Lösung wird angestrebt, den Haltering auf möglichst einfache Weise zwischen den Klauenpolfingern montieren zu können.

### Vorteile der Erfindung

Die erfindungsgemäße elektrische Maschine mit den kennzeichnenden Merkmalen des Anspruchs 1 hat gegenüber dem Stand der Technik den Vorteil, dass durch die Umgestaltung der Klauenpolfinger anstelle eines festen Verbundes nur noch eine formschlüssige Verbindung mit dem Haltering für die Permanentmagnete geschaffen wurde, so dass die aufwendige Herstellung der Schweissverbindungen entfällt und die am Haltering wirksamen Fliehkräfte dennoch sicher von den Klauenpolen aufgenommen werden.

Ein weiterer Vorteil besteht darin, dass durch die mäanderförmige Ausbildung des Halteringes die Halterungen der Permanentmagnete nicht mehr in den Wickelraum für die Erregerwicklung ragen, so dass dort nunmehr eine Erregerwicklung mit größerem Querschnitt und demzufolge mit größerer Erregerleistung im Klauenpolläufer untergebracht werden kann.

Das erfindungsgemäße Verfahren zur Herstellung der elektrischen Maschine nach den kennzeichnenden Merkmalen des Anspruchs 6 hat gegenüber dem Stand der Technik den Vorteil, dass innerhalb der bisherigen Montagelinie zur Herstellung eines Klauenpolläufers ohne Permanentmagnete an einer dort eingefügten zusätzlichen Montagestation Haltering und Permanentmagnete vollautomatisch zwischen den Klauenpolen des Läufers montiert werden können.

Vorteilhafte Weiterbildungen und Ausgestaltungen der Erfindung ergeben sich aus den übrigen, in den Unteransprüchen aufgeführten Merkmalen.

Eine zusätzliche Maßnahme, das elastische Hochdrücken der Klauenpolfinger durch die Zentrifugalkräfte in engen Grenzen zu halten, besteht darin, dass die Längsschlitze an den Seitenflanken der Klauenpolfinger über einen stirnseitigen Schlitz an der Spitze der Klauenpolfinger miteinander verbunden sind, in den eine vom Verbindungsabschnitt des Halteringes angeformte Leiste eingreift. Ferner ist es zur Erhöhung der Biegesteifigkeit der axialen Abschnitte des Halteringes zweckmäßig, dass sie jeweils mit einer radial nach außen gerichteten Längsmulde versehen sind. Eine einfache Herstellung des Halteringes läßt sich dadurch realisieren, dass der Haltering aus einem magnetisch unwirksamen Blech ausgestanzt und geprägt ist. In einfachster Weise wird dabei ein ausgestanzter Blechstreifen verwendet, der in Form eines offenen Halteringes gebogen und geprägt wird.

Die Erfindungsmerkmale sind zwar bei Klauenpolläufern mit Schleifringen besonders vorteilhaft anzuwenden. Sie lassen sich aber ebenfalls an sogenannten Leitstückläufern realisieren, sofern dort der feste Klauenpolverbund mit zusätzlichen Mitteln oder Maßnahmen hergestellt wird. Dabei bildet das Leitstück den einen der beiden Klauenpole.

Bei der erfindungsgemäßen Herstellung der elektrischen Maschine werden zweckmäßigerweise in einem die Montage des Halteringes vorbereitenden Verfahrensschritt in die Seitenflanken der Klauenpolfinger axiale Längsschlitze zur Aufnahme der axialen Abschnitte des Halteringes eingearbeitet. An einer zusätzlichen Montagestation wird dann der mäanderförmig ausgebildete Haltering zunächst mit je einer Längsseite seiner axialen Abschnitte in die Längsschlitze an den Klauenpolfingern des ersten Klauenpoles eingeschoben. Dazu wird der erste Klauenpol auf einem Werkzeugträger montiert, der einen die Klauenpolfinger und den Haltering von außen einfassenden Magnetring hat, welcher im Bereich der axialen Abschnitten des Halteringes partiell aufmagnetisiert ist. Für die Montage der Permanentmagnete werden diese zweckmäßigerweise zunächst in ringförmiger Anordnung in axiale Löcher eines Rundmagazines eingesetzt. Das Rundmagazin wird danach oberhalb der freien Stirnseite der Verbindungsabschnitte des Halteringes derart positioniert, dass die axialen Löcher mit den Permanentmagneten paarweise zwischen den Verbindungsabschnitten zu liegen kommen. Mittels eines oberhalb des Rundmagazines angeordneten ringförmigen Stempels mit einer Anzahl von den Löchern des Ringmagazines zugeordneten Fingern werden die Permanentmagnete sodann soweit axial aus den Löchern heraus in den Raum zwischen den Klauenpolfingern eingeschoben, bis sich die Permanentmagnete jeweils an der Seitenflanke eines Klauenpolfingers anlegen. Beim weiteren Einschieben gleiten die Permanentmagnete schließlich an den Seitenflanken der Klauenpolfinger seitlich ab, so dass sie eine Schrägstellung einnehmen, in der sie vom Magnetring durch dessen partielle Magnetisierung gehalten werden. Nach dem Entfernen des Stempels und des Rundmagazines werden die Permanentmagnete von einem axial in den Ringmagneten des Werkstückträgers eintauchenden Formstempel durch dessen klauenförmige Kontur in ihre Endlage an den axialen Abschnitten des Halteringes verschränkt und dort weiterhin vom Magnetring gehalten. Die so vormontierte erste Baugruppe mitsamt dem Werkstückträger und dem Magnetring wird nun mit der Läuferwelle, dem Polkern, der Erregerwicklung und dem zweiten Klauenpol zusammengefügt, wobei der erste Klauenpol mit einem Festsitz auf die Läuferwelle aufgesetzt wird. Der zweite Klauenpol wird mit einem Schiebesitz auf die Läuferwelle aufgesetzt, durch den ersten Klauenpol und den Haltering positioniert und schließlich mit der Läuferwelle verstemmt.

### Zeichnung

Ein Ausführungsbeispiel der Erfindung ist in der Zeichnung dargestellt und näher erläutert. Es zeigen:
Figur 1 einen erfindungsgemäß ausgebildeten Drehstromgenerator für Kraftfahrzeuge im Längsschnitt,
Figur 2 einen ersten Klauenpol des Generators aus Figur 1 in raumbildlicher Darstellung,
Figur 3 einen Haltering für die Permanentmagnete in raumbildlicher Darstellung,
Figur 4 den ersten Klauenpol mit aufgesetztem Haltering in raumbildlicher Darstellung,
Figur 5 eine Montagestation zum Einsetzen der Permanentmagnete in raumbildlicher Darstellung,
Figur 6 die Montagestation aus Figur 5 mit einem Formstempel zur Positionierung der Dauermagnete,
Figur 7 die Montagestation aus Figur 6 mit dem ersten Klauenpol, dem Haltering und den darin positionierten Permanentmagneten als erste Baugruppe,
Figur 8 die Montagestation aus Figur 7 in Teilansicht mit im ersten Klauenpol eingesetzter zweiter Baugruppe aus Läuferwelle, Polring und Erregerwicklung und mit dem zweiten Klauenpol vor der Montage und
Figur 9 den zusammengebauten Klauenpolläufer.

### Beschreibung des Ausführungsbeispieles

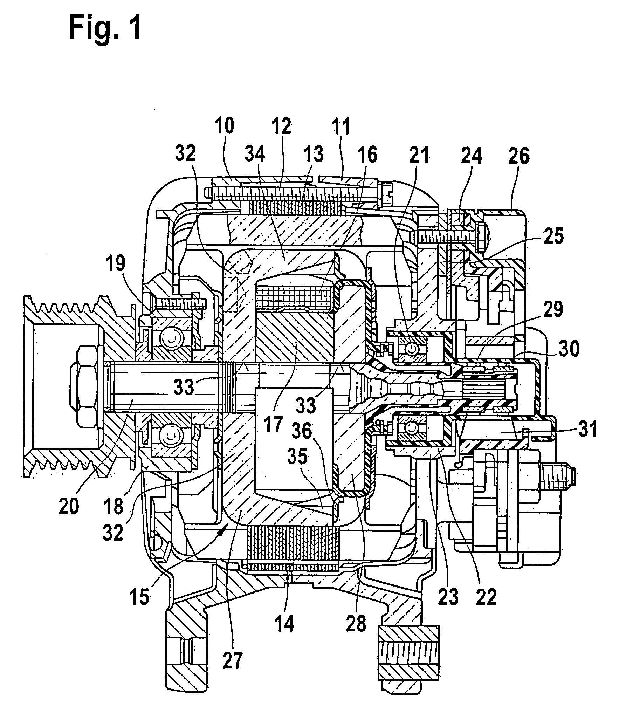

Die Figur 1 zeigt einen Drehstromgenerator für Kraftfahrzeuge im Längsschnitt, dessen Gehäuse im wesentlichen aus zwei Lagerschilden 10 und 11 besteht, die durch Schrauben 12 zusammengehalten sind und zwischen denen das Blechpaket 13 eines Ständers 14 eingespannt ist. Innerhalb der Ständerbohrung ist ein Klauenpolläufer 15 angeordnet, dessen Erregerwicklung 16 auf einem Polkern 17 aufgewickelt ist. Auf der linken Antriebsseite des Generators ist im Lagerdeckel 10 eine Nabe 18 ausgebildet, in der ein Kugellager 19 zur Lagerung des antriebsseitigen Teiles einer Läuferwelle 20 angeordnet ist. Der rechte Teil der Läuferwelle 20 ist in einem schwächer ausgebildeten Kugellager 21 gelagert, welches zusammen mit einer Schleifringkapsel 22 in einer Nabe 23 des Lagerschildes 11 angeordnet ist. An der Stirnseite des hinteren Lagerschildes 11 ist ein Plus-Kühlkörper 24 und ein Minus-Kühlkörper 25 eines Gleichrichters gemeinsam mit einer Schutzkappe 26 befestigt. Stirnseitig am Polkern 17 ist ein erster und zweiter Klauenpol 27, 28 auf der Läuferwelle 20 aufgepresst bzw. verstemmt. Zur elektrischen Versorgung der Erregerwicklung 16 sind am hinteren Wellenende zwei Schleifringe 29, 30 isoliert befestigt, die mit den Bürsten eines am hinteren Lagerschild 11 befestigten Bürstenhalters 31 zusammenwirken.

Die Klauenpole 27 und 28 werden aus Polplatinen durch Kaltverformung hergestellt. Sie bestehen jeweils aus einer Polscheibe 32 mit einem zentrisch eingestanzten Loch 33 und über den Umfang gleichmäßig verteilt axial abgewinkelten Klauenpolfingern 34. Die Klauenpolfinger 34 beider Klauenpole 27 und 28 greifen wechselseitig mit Abstand ineinander, wobei sie die Erregerwicklung 16 umfassen. Zur Erhöhung der Erregerleistung des Klauenpolläufers 15 ist jeweils zwischen den Klauenpolfingern 34 ein Permanentmagnet 35 angeordnet und in einer Halterung 36 derart aufgenommen, dass er gegenüber den bei Betrieb der Maschine an ihm wirksamen Zentrifugalkräften abgestützt ist.

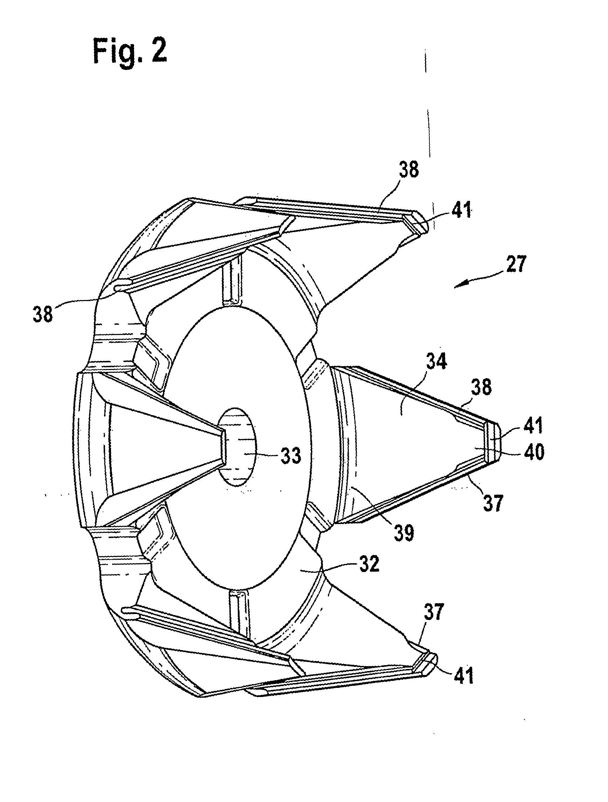

In Figur 2 ist der erste Klauenpol 27 des Klauenpolläufers 15 raumbildlich vergrößert dargestellt. Dort ist erkennbar, dass die Klauenpolfinger 34 an ihren Seitenflanken 37 jeweils einen spanabhebend eingearbeiteten Längsschlitz 38 haben, der jeweils frei auslaufend von der Klauenpolwurzel 39 bis zur Klauenpolspitze 40 reicht. Die Längsschlitze 38 an den beiden Seitenflanken 37 eines jeden Klauenpolfingers 34 sind dabei über einen stirnseitigen Schlitz 41 an der Klauenpolspitze 40 der Klauenpolfinger 34 miteinander verbunden.

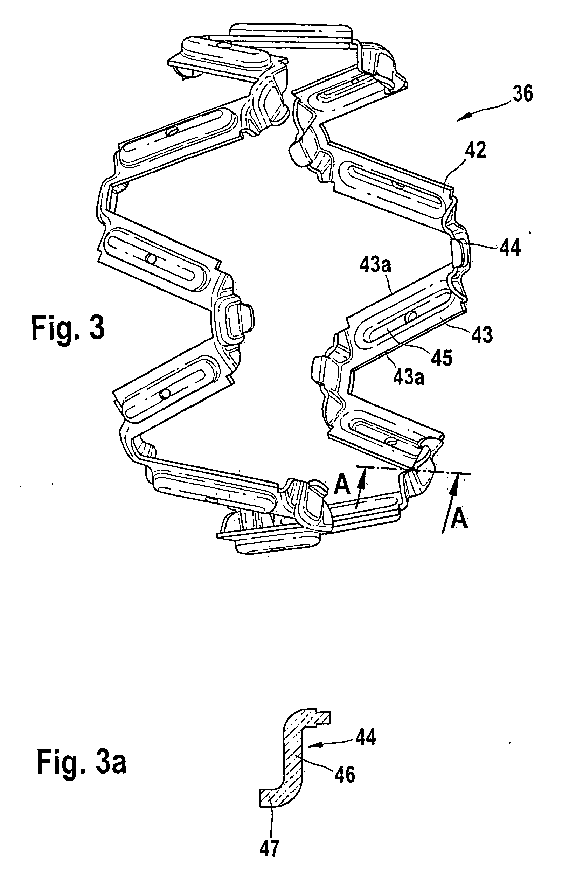

Figur 3 zeigt die Halterung 36 für die Permanentmagnete 35 in Form eines mäanderförmig ausgebildeten, aus magnetisch unwirksamem Material hergestellten Halteringes 42, der axiale Abschnitte 43 und daran wechselseitig angeordnete Verbindungsabschnitte 44 aufweist, die zugleich axiale Anschläge für die Permanentmagnete 35 bilden. Der Haltering 42 ist aus einem Blech ausgestanzt, gebogen und geprägt worden. Er kann alternativ auch als offener Haltering aus einem Blechstreifen ausgestanzt, gebogen und geprägt werden, wobei Anfang und Ende des Blechstreifens vorzugsweise in der Mitte eines axialen Abschnittes 43 angeordnet wird. Die axialen Abschnitte 43 des Halteringes 42 sind jeweils mit einer radial nach außen gewölbten Längsmulde 45 zur Erhöhung von dessen Biegesteifigkeit versehen. Die Verbindungsabschnitte 44 sind dabei gemäß Figur 3a als Stege 46 mit rechteckförmigem, radial hochgestelltem, zargenförmigem Blechquerschnitt nach der Linie A-A aus Figur 3 ausgebildet. Dadurch erhält man an den Verbindungsabschnitten 44 eine hohe Verbiegungssteifigkeit gegenüber dort wirksamen Zentrifugalkräften. Sie ist höher als die Verbiegesteifigkeit der axialen Abschnitte 43 bezüglich der dort angreifenden Zentrifugalkräfte.

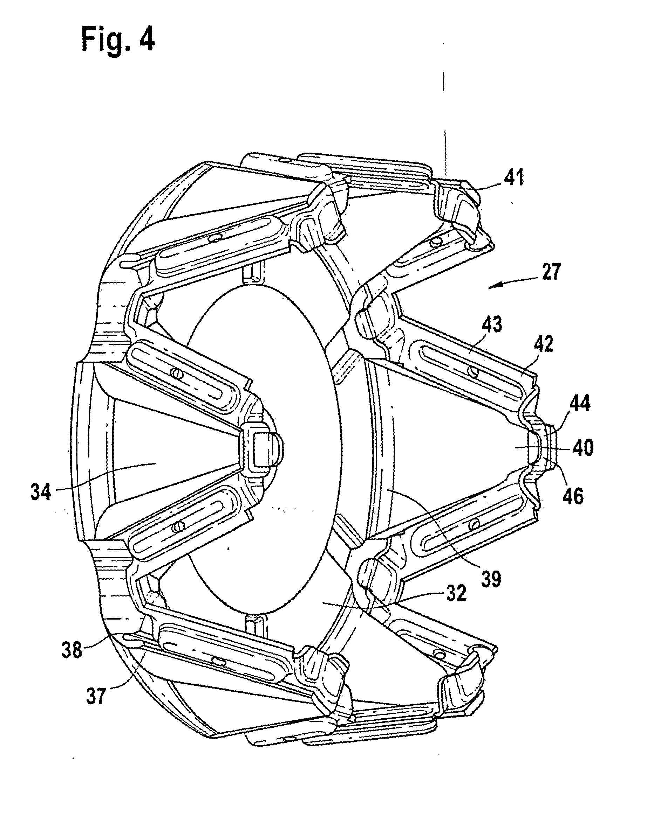

Figur 4 zeigt in raumbildlich vergrößerter Darstellung den ersten Klauenpol 27 aus Figur 2 mit dem auf seine Klauenpolfinger 34 aufgeschobenen Haltering 42 aus Figur 3. Dort ist erkennbar, dass die axialen Abschnitte 43 sich mit ihrer einen Längsseite jeweils an einer Seitenflanke 37 der Klauenpolfinger 34 abstützen, indem sie in den dort eingearbeiteten Längsschlitz 38 der Klauenpolfinger 34 eingreifen, wobei die Verbindungsabschnitte 44 des Halteringes 42 jeweils an der Polspitze 40 der Klauenpolfinger 34 zwei benachbarte axiale Abschnitte 43 miteinander verbinden. In Verbindung mit Figur 3 ist aus Figur 4 ferner erkennbar, dass die Stege 46 oder Verbindungsabschnitte 44 jeweils an den Stirnseiten der benachbarten axialen Abschnitte 43 über nahezu deren gesamter Breite angeformt und radial nach innen abgewinkelt sind. Dadurch erhält der gesamte Haltering 42 eine hohe Steifigkeit gegenüber an ihm angreifender Zentrifugalkräfte. Ferner bilden die Verbindungsabschnitte 44 beim Aufschieben des Halteringes 42 auf die Klauenpolfinger 34 des Klauenpols 27 einen axialen Anschlag. In dieser Position greift ferner eine an den Verbindungsabschnitten 44 des Halteringes 42 angeformte Leiste 47 in den Schlitz 41 an der Polspitze 40 der Klauenpolfinger 34 ein.

Bei der Herstellung des Drehstromgenerators gemäß Figur 1 können die bisherigen Produktionslinien verwendet werden. Zur Herstellung des Ständers 14 und der beiden Lagerschilde 10 und 11 treten durch die erfindungsgemäße neuartige Halterung der Permanentmagnete im Klauenpolläufer 15 keinerlei Änderungen auf. Auch am Klauenpolläufer 15 können dessen Einzelteile, als da sind Läuferwelle 20, Polkern 17, Erregerwicklung 16, Klauenpole 27 und 28 sowie die komplette Schleifringanordnung, zunächst in unveränderter Weise hergestellt werden. Neuartig ist dagegen die Anordnung und Halterung 26 der Permanentmagnete 35 und deren Einbau zwischen den Klauenpolfingern 34 beim Zusammenbau des Klauenpolläufers 15. Dafür werden zunächst gemäß Figur 2 in die Seitenflanken 37 der Klauenpolfinger 34 beider Klauenpole 27 und 28 die axialen Längsschlitze 38 zur Aufnahme der axialen Abschnitte 43 des Halteringes 42 eingearbeitet. Ferner wird zur Halterung der Permanentmagnete 35 der Haltering 42 aus magnetisch unwirksamem Material gemäß Figur 3 mit den axialen Abschnitten 43 und den Verbindungsabschnitten 44 aus einem Blech ausgestanzt und in die Form gemäß Figur 3 gebogen und geprägt. Der Haltering 42 wird dann zunächst in Achsrichtung auf die Klauenpolfinger 34 des ersten Klauenpoles 27 aufgeschoben, in dem er mit je einer Längsseite seiner axialen Abschnitte 43 gemäß Figur 4 in die Längsschlitze 38 an den Klauenpolfingern 34 soweit eingeschoben wird, bis die hinteren Verbindungsabschnitte 44 an den Polspitzen 40 der Klauenpolfinger 34 anliegen.

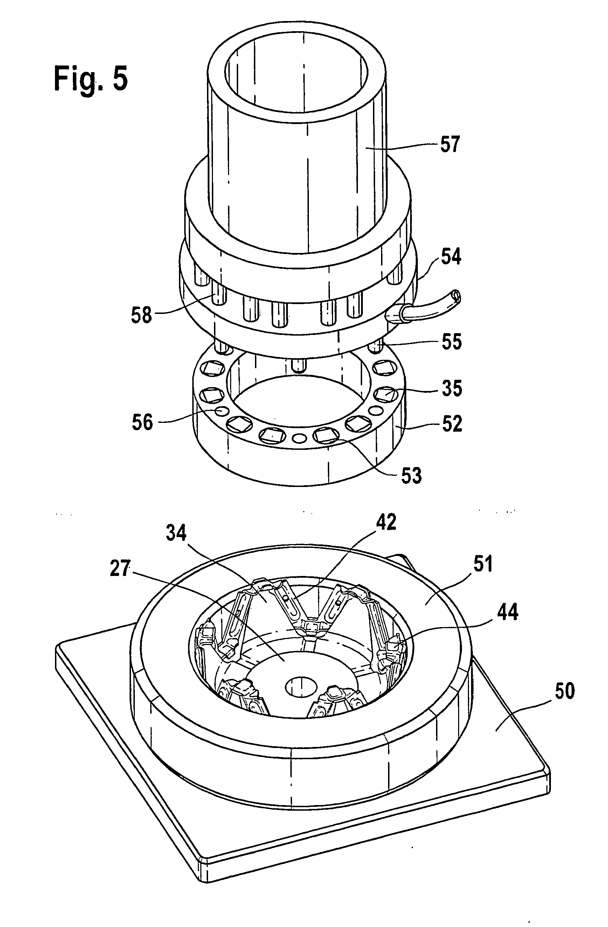

Wie Figur 5 zeigt, wird der erste Klauenpol 27 mit dem Haltering 42 nunmehr auf einem Werkstückträger 50 montiert, wobei der Werkstückträger 50 einen Magnetring 51 trägt, der den Klauenpol 27 mit seinen Klauenpolfingern 34 sowie den Haltering 42 von außen einfasst und somit diese Teile umgibt. Der Magnetring 51 ist dabei im Bereich der axialen Abschnitte 43 des Halteringes 42 partiell aufmagnetisiert. Der Werkstückträger 50 unterscheidet sich vom Stand der Technik lediglich durch den zusätzlich aufgebrachten Magnetring 51.

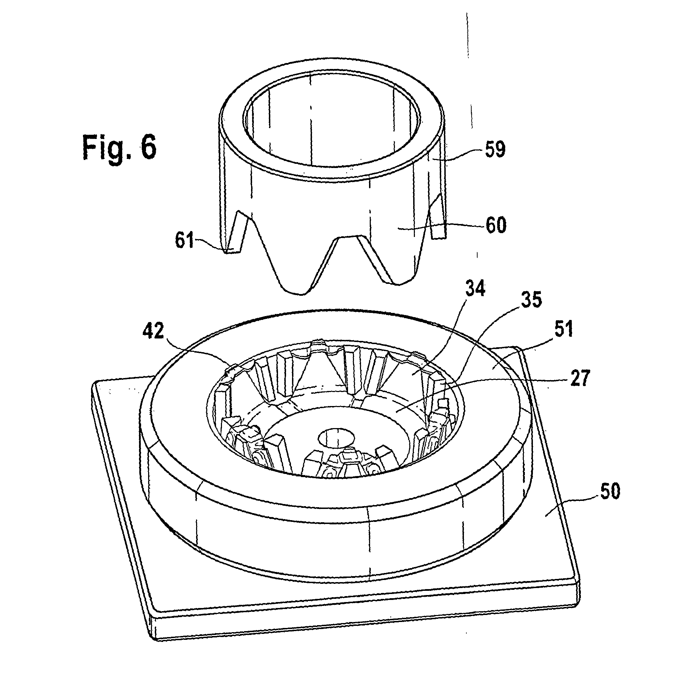

Neuartig sind dagegen die in Figur 5 und 6 erkennbaren Vorrichtungen zum Einsetzen und Positionieren der Permanentmagnete 35 in den Haltering 42. Zu diesem Zweck werden zunächst Rundmagazine 52 an einem anderen Ort mit den Permanentmagneten 35 bestückt, indem diese in entsprechend große axiale Löcher 53 des Rundmagazines 52 eingesetzt werden. Die so bestückten Rundmagazine können auf Paletten zugeliefert werden. Zur Herstellung des Klauenpolläufers 15 wird sodann jeweils ein Rundmagazin 52 aus einer solchen, nicht dargestellten Palette entnommen und gemäß Figur 5 oberhalb des Werkstückträgers 50 positioniert. Die axialen Löcher 53 mit den Permanentmagneten 35 sind dabei in ringförmiger Anordnung von einem darüber angeordneten, axial zu bewegenden Ventilgehäuse 54 in ihrer axialen Lage mittels Unterdruck durch bekannte Pick-and-place-Technik gehalten. Die Positionierung des Rundmagazins 52 am Ventilgehäuses 54 erfolgt dabei durch Stifte 55 des Ventilgehäuses 54, die in Axialbohrungen 56 des Rundmagazins 52 eingreifen. Oberhalb des Ventilgehäuses 54 befindet sich ein ringförmiger Stempel 57, der ebenfalls axial verschiebbar ist und der an seiner Unterseite axial vorstehende Finger 58 aufweist, die ebenfalls ringförmig angeordnet den axialen Löchern 53 des Rundmagazins 52 zugeordnet sind. Rundmagazin 52, Ventilgehäuse 54 und Stempel 57 werden nunmehr auf den Werkstückträger 50 zubewegt und auf den freien stirnseitigen Verbindungsabschnitten 44 derart positioniert, dass die axialen Löcher 53 mit den Permanentmagneten 35 paarweise zwischen den Verbindungsabschnitten 44 zu liegen kommen. Anschließend wird der im Rundmagazin 52 befindliche Satz von Permanentmagneten 35 mit den Fingern 58 des ringförmigen Stempels 57 so weit axial aus den Löchern 53 heraus in den Raum zwischen den Klauenpolfingern 34 geschoben, bis die Permanentmagnete 35 sich jeweils an der Seitenflanke 37 eines Klauenpolfingers 34 anlegen. Beim weiteren Vorschieben der Permanentmagnete 35 durch die Finger 58 des Stempels 57 werden schließlich die Permanentmagnete jeweils an der Seitenflanke 37 eines Klauenpolfingers 34 abgleiten und dabei eine Schrägstellung einnehmen. Durch die partielle Magnetisierung des Magnetringes 51 werden die Permanentmagnete 35 zunächst in dieser Position festgehalten, so dass das Rundmagazin 52 mit dem Ventilgehäuse 54 und dem Stempel 57 wieder entfernt werden kann.

Figur 6 zeigt den Werkstückträger 50 mit dem Magnetring 51 und mit dem Satz Permanentmagnete 35 in der vorerwähnten Schrägstellung. Dort ist auch erkennbar, dass die Permanentmagnete 35 stabförmig ausgebildet sind und einen trapezförmigen nach außen zunehmenden Querschnitt haben. Um die Permanentmagnete 35 in ihre Endlage unterhalb der axialen Abschnitten 43 des Halteringes 42 zu bringen, wird gemäß Figur 6 nunmehr ein Formstempel 59 oberhalb des Nerkstückträgers 50 mit dem Ringmagneten 51 in Position gebracht, der mit einer klauenförmigen Kontur 60 in den Ringmagneten 51 axial eintaucht und dabei mit den Klauenspitzen 61 jeweils zwischen die paarweise schräggestellten Permanentmagnete 35 eingeführt wird. Dabei werden die Permanentmagnete 35 schließlich bis in ihre Endlage verschränkt, in der sie beim anschließenden Entfernen des Formstempels 59 vom Magnetring 51 gehalten werden.

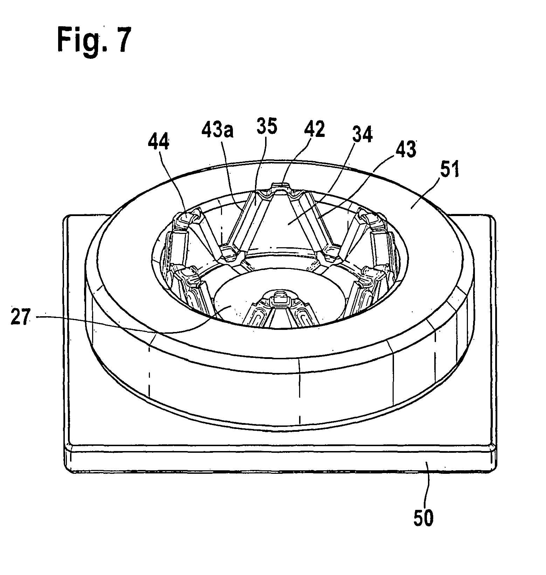

Figur 7 zeigt den Werkstückträger 50 mit dem Magnetring 51 und mit den in ihrer Endlage positionierten Permanentmagneten 35 jeweils auf der Innenseite eines axialen Abschnittes 43 des Halteringes 42. Der erste Klauenpol 27 bildet dabei mit dem Haltering 42 und den Permanentmagneten 35 eine erste Baugruppe.

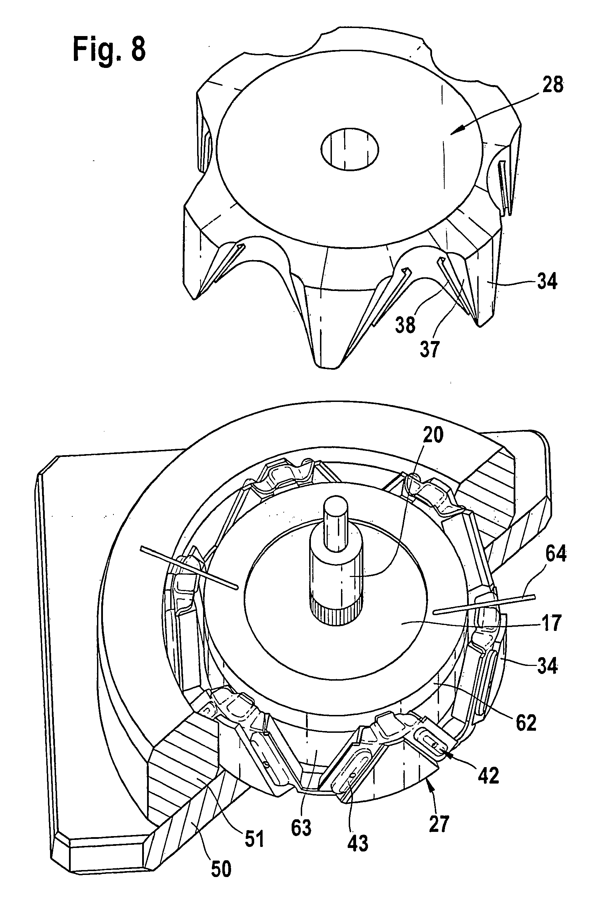

An einem anderen Fertigungsabschnitt werden in bekannter Weise die Läuferwelle 20 mit dem Polkern 17 und der Erregerwicklung 16 zu einer zweiten Baugruppe vormontiert. Gemäß Figur 8 wird nun die vormontierte erste Baugruppe auf dem Werkstückträger 50 mitsamt dem Magnetring 51 mit der vorerwähnten zweiten Baugruppe zusammengefügt, wobei der erste Klauenpol 27 auf einen gerändelten Abschnitt der Läuferwelle 20 aufgesetzt und fixiert wird. Aus Figur 8 ist ferner erkennbar, dass die Erregerwicklung von einer Papierisolation 62 umgeben ist, die von einer Bandage 63 fixiert wird und an deren obenliegender Stirnseite die Drahtenden 64 der Erregerwicklung zum Anschluss an die Schleifringanordnung 47 herausgeführt sind. Zur Herstellung des Klauenpolläufers 15 wird nun in einem weiteren Arbeitsgang der zweite Klauenpol 28 auf das freie Ende der Läuferwelle 14 axial aufgesetzt, wobei dessen Klauenpolfinger 34 zwischen die Klauenpolfinger 34 des ersten Klauenpoles 27 in die Lücken zwischen den axialen Abschnitten 43 des Halteringes 42 eingreifen und wobei schließlich die noch freien Längsseiten der axialen Abschnitte 43 des Halteringes 42 in die Längsschlitze 38 an den Klauenpolfingern 34 des zweiten Klauenpols 28 eingeschoben werden. Der zweite Klauenpol 28 wird dabei über seinen Schiebesitz auf der Läuferwelle 20 durch den ersten Klauenpol 27 und den Haltering 42 in Umfangsrichtung positioniert. Er wird schließlich nach der Positionierung auf der Läuferwelle 20 durch Verstemmen fixiert. In einem weiteren Arbeitsgang kann nunmehr, wie schon bisher, die Schleifringanordnung 47 auf das obere Ende der Läuferwelle 20 aufgesetzt werden.

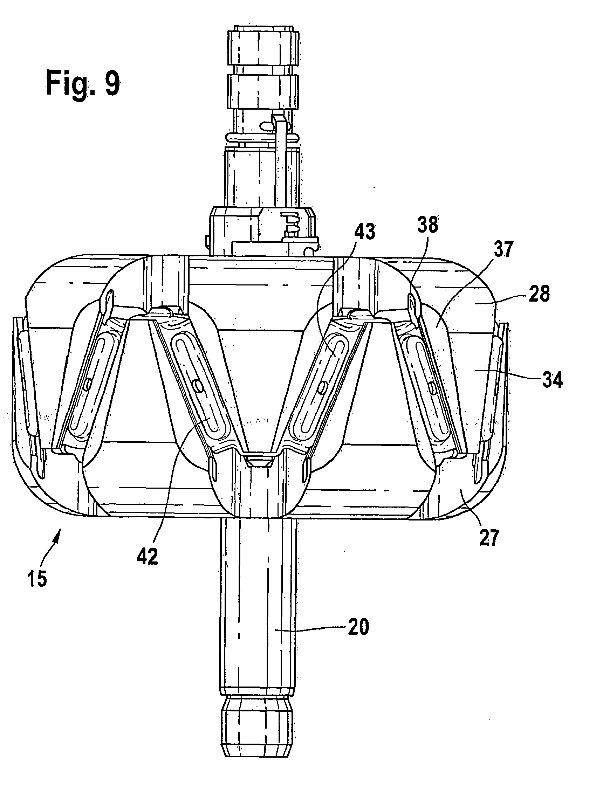

Figur 9 zeigt den fertiggestellten Klauenpolläufer 15 mit dem erfindungsgemäß ausgebildeten Haltering 42, dessen axiale Abschnitte 43 jeweils zwischen zwei benachbarten Klauenpolfingern 34 angeordnet sind, und die sich mit ihren Längsseiten jeweils in einem Längsschlitz einer Seitenflanke 37 der Klauenpolfinger 34 abstützen. Die Permanentmagnete werden von den Seitenflanken 37 der Klauenpolfinger 34 und von den Verbindungsabschnitten 44 seitlich sowie von den axialen Abschnitten 43 des Halteringes 42 außen eingefasst und gehalten. Sie werden ferner mittels einer üblichen Tauchimprägnierung noch zusätzlich zwischen den Klauenpolfingern 34 fixiert. Sie werden außerdem vor dem Zusammenbau des Läufers mit dem Ständer durch von außen an den Klauenpolfingern 34 angelegte Magnetfelder in Umfangsrichtung des Läufers mit abwechselnder Polung aufmagnetisiert.

## Patentansprüche

1. Elektrische Maschine, insbesondere Drehstromgenerator für Kraftfahrzeuge, mit einem eine Ständerwicklung tragenden Ständer (14) und einem damit zusammenwirkenden Klauenpolläufer (15), mit einem von einer Erregerwicklung (16) umgebenen Polkern (17) und zwei auf einer Läuferwelle (20) befestigten Klauenpolen (27, 28), die über den Umfang gleichmäßig verteilte und wechselseitig mit Abstand axial ineinandergreifende Klauenpolfinger (34) haben, wobei zwischen den benachbarten Klauenpolfingern jeweils mindestens ein Permanentmagnet (35) angeordnet und von einer magnetisch unwirksamen Halterung (36) aufgenommen, sowie gegenüber Zentrifugalkräften abgestützt ist, und wobei die Halterung (36) der Permanentmagnete (35) aus einem mäanderförmig ausgebildeten Haltering (42) besteht, dessen axiale Abschnitte (43) jeweils zwischen zwei benachbarten Klauenpolfingern (34) angeordnet sind und sich mit ihren Längsseiten an jeweils einer Seitenflanke (37) der Klauenpolfinger (34) abstützen, und dessen Verbindungsabschnitte (44) jeweils an der Polspitze (40) der Klauenpolfinger (34) zwei benachbarte axiale Abschnitten (43) miteinander verbinden, **dadurch gekennzeichnet, dass** der Haltering (42) mit den Längsseiten seiner axialen Abschnitte (43) jeweils in einen Längsschlitz (38) an den Seitenflanken (37) der Klauenpolfinger (34) eingreift.

2. Elektrische Maschine nach Anspruch 1, **dadurch gekennzeichnet, dass** die Längsschlitze (38) an den Seitenflanken (37) über einen stirnseitigen Schlitz (41) an der Polspitze (40) der Klauenpolfinger (34) miteinander verbunden sind, in den eine am Verbindungsabschnitt (44) des Halteringes (42) angeformte Leiste (47) eingreift.

3. Elektrische Maschine nach Anspruch 1 oder 2, **dadurch gekennzeichnet, dass** die axialen Abschnitte (43) mit jeweils einer radial nach außen gerichteten Längsmulde (45) zur Erhöhung ihrer Biegesteifigkeit versehen sind.

4. Elektrische Maschine nach einem der vorherigen Ansprüche, **dadurch gekennzeichnet, dass** der Haltering (42) aus einem Blech ausgestanzt, gebogen und geprägt ist.

5. Elektrische Maschine nach Anspruch 4, **dadurch gekennzeichnet, dass** der Haltering (42) als offener Ring aus einem ausgestanzten Blechstreifen gebogen und geprägt ist.

6. Verfahren zur Herstellung einer elektrischen Maschine, insbesondere eines Drehstromgenerators für Kraftfahrzeuge nach dem Oberbegriff des Anspruchs 1, **dadurch gekennzeichnet, dass** an den Seitenflanken (37) der Klauenpolfinger (34) jeweils ein Längsschlitz (38) eingearbeitet wird und dass der mäanderförmig ausgebildete Haltering (42) in Achsrichtung auf die Klauenpolfinger (34) des ersten Klauenpoles (27) derart aufgeschoben wird, dass die axialen Abschnitte (43) mit ihrer einen Längsseite in die Längsschlitze (38) eingeschoben werden, dass sodann die Permanentmagnete (35) in die axialen Abschnitte (43) des Halteringes (42) eingesetzt werden, so dass eine erste Baugruppe entsteht, auf die das eine Ende der Läuferwelle (20) aufgesetzt wird, und das schließlich der zweite Klauenpol (28) mit seinen Klauenpolfingern (34) zwischen die Klauenpolfinger (39) des ersten Klauenpoles (27) derart eingesetzt wird, dass dabei der Haltering (42) auch auf die Klauenpolfinger (34) des zweiten Klauenpols (28) in Achsrichtung aufgeschoben wird, indem die axialen Abschnitten (43) des Halteringes (42) mit ihrer anderen Längsseite in die Längsschlitze (38) der Klauenpolfinger (34) des zweiten Klauenpoles (28) eingeschoben werden.

7. Herstellverfahren nach Anspruch 6, **dadurch gekennzeichnet, dass** die Läuferwelle (20) mit dem Polkern (17) und der Erregerwicklung (16) zu einer zweiten Baugruppe vormontiert wird.

8. Herstellverfahren nach Anspruch 7, **dadurch gekennzeichnet, dass** der zweite Klauenpol (28) auf das andere Ende der Läuferwelle (20) aufgesetzt wird.

9. Herstellverfahren nach einem der Ansprüche 6 bis 8, **dadurch gekennzeichnet, dass** der erste Klauenpol (27) auf einem Werkstückträger (50) montiert wird, der einen die Klauenpolfinger (34) und den Haltering (42) von außen einfassenden Magnetring (42) hat, welcher im Bereich der axialen Abschnitte (43) des Halteringes (42) partiell aufmagnetisiert ist.

10. Herstellverfahren nach Anspruch 9, **dadurch gekennzeichnet, dass** die Permanentmagnete (35) zunächst in ringförmiger Anordnung in axiale Löcher (53) eines Rundmagazines (52) eingesetzt werden, und dass das Rundmagazin (52) danach oberhalb der freien stirnseitigen Verbindungsabschnitte (43) des Halteringes (42) derart positioniert wird, dass die axialen Löcher (53) mit den Permanentmagneten (35) paarweise zwischen den Verbindungsabschnitten (44) des Halteringes (42) zu liegen kommen.

11. Herstellverfahren nach Anspruch 10, **dadurch gekennzeichnet, dass** oberhalb des Rundmagazines (52) ein ringförmiger Stempel (57) mit den Löchern (53) des Rundmagazines (52) zugeordneten Fingern (58) angeordnet wird, mit denen die Permanentmagnete (35) so weit axial aus den Löchern (53) heraus in den Raum zwischen den Klauenpolfingern (34) geschoben werden, bis die Permanentmagnete (35) sich jeweils an der Seitenflanke (37) eines Klauenpolfingers (34) anlegen und schließlich an ihr seitlich abgleiten und dabei eine Schrägstellung einnehmen, in der sie vom Magnetring (51) gehalten werden.

12. Herstellverfahren nach Anspruch 11, **dadurch gekennzeichnet, dass** nach dem Entfernen des Stempels (57) und des Rundmagazines (52) die Permanentmagnete (35) von einem axial in den Ringmagneten (51) des Merkstückträgers (50) eintauchenden Formstempel (59) mit klauenpolförmiger Kontur (60) in ihre Endlage an den axialen Abschnitten (43) des Halteringes (42) verschränkt und dort vom Magnetring (51) gehalten werden.

13. Herstellverfahren nach Anspruch 12, **dadurch gekennzeichnet, dass** die so vormontierte erste Baugruppe mitsamt dem Magnetring (51) mit der zweiten Baugruppe und dem zweiten Klauenpol (28) zusammengefügt wird, wobei der erste Klauenpol (27) mit einem Festsitz auf die Läuferwelle (20) der zweiten Baugruppe aufgesetzt wird.

14. Herstellverfahren nach Anspruch 13, **dadurch gekennzeichnet, dass** der zweite Klauenpol (28) mit einem Schiebesitz auf die Läuferwelle (20) aufgesetzt, durch den ersten Klauenpol (27) und den Haltering (42) positioniert und schließlich auf der Läuferwelle (20) befestigt, vorzugsweise mit ihr verstemmt wird.

## Claims

1. Electrical machine, in particular three-phase generator for motor vehicles, comprising a stator (14), which has a stator winding, and a claw-pole rotor (15) which interacts with the said stator, comprising a pole core (17), which is surrounded by a field winding (16), and two claw poles (27, 28) which are mounted on a rotor shaft (20) and have claw-pole fingers (34) which are uniformly distributed over the circumference and alternately axially engage one in the other at a distance, with in each case at least one permanent magnet (35) being arranged between the adjacent claw-pole fingers and held by a magnetically inactive retaining means (36) and being supported against centrifugal forces, and with the retaining means (36) of the permanent magnets (35) consisting of a meandering retaining ring (42), of which the axial sections (43) are in each case arranged between two adjacent claw-pole fingers (34) and are supported by way of their longitudinal sides on in each case a side flank (37) of the claw-pole fingers (34), and of which the connecting sections (44) connect two adjacent axial sections (43) to one another in each case at the pole tips (40) of the claw-pole fingers (34), **characterized in that** the retaining ring (42) engages in a respective longitudinal slot (38) on the side flanks (37) of the claw-pole fingers (34) by way of the longitudinal sides of its axial sections (43).

2. Electrical machine according to Claim 1, **characterized in that** the longitudinal slots (38) on the side flanks (37) are connected to one another by means of a slot (41) in the end of the pole tip (40) of the claw-pole fingers (34), a strip (47) which is integrally formed on the connecting section (44) of the retaining ring (42) engaging in said slot.

3. Electrical machine according to Claim 1 or 2, **characterized in that** the axial sections (43) are in each case provided with a longitudinal recess (45), which is directed radially outwards, in order to increase the bending stiffness of the said axial sections.

4. Electrical machine according to one of the preceding claims, **characterized in that** the retaining ring (42) is punched, bent and stamped out of a metal sheet.

5. Electrical machine according to Claim 4, **characterized in that** the retaining ring (42) is bent and stamped out of a punched strip of sheet metal as an open ring.

6. Method for producing an electrical machine, in particular a three-phase generator for motor vehicles according to the preamble of Claim 1, **characterized in that** a longitudinal slot (38) is made on the side flanks (37) of the claw-pole fingers (34) in each case, and **in that** the meandering retaining ring (42) is pushed onto the claw-pole fingers (34) of the first claw pole (27) in the axial direction in such a way that the axial sections (43) are pushed into the longitudinal slots (38) by way of one of their longitudinal sides, **in that** the permanent magnets (35) are then inserted into the axial sections (43) of the retaining ring (42), so that a first subassembly is produced, one end of the rotor shaft (20) being fitted on the said subassembly, and **in that** finally the second claw pole (28) is inserted between the claw-pole fingers (34) of the first claw pole (27) by way of its claw-pole fingers (34) in such a way that, in the process, the retaining ring (42) is pushed onto the claw-pole fingers (34) of the second claw pole (28) in the axial direction by the axial sections (43) of the retaining ring (42) being pushed into the longitudinal slots (38) of the claw-pole fingers (34) of the second claw pole (28) by way of their other longitudinal side.

7. Production method according to Claim 6, **characterized in that** the rotor shaft (20) together with the pole core (17) and the field winding (16) are preassembled to form a second subassembly.

8. Production method according to Claim 7, **characterized in that** the second claw pole (28) is fitted on the other end of the rotor shaft (20).

9. Production method according to one of Claims 6 to 8, **characterized in that** the first claw pole (27) is mounted on a workpiece support (50) which has a magnetic ring (42) which holds the claw-pole fingers (34) and the retaining ring (42) from the outside and which is partially magnetized in the region of the axial sections (43) of the retaining ring (42).

10. Production method according to Claim 9, **characterized in that** the permanent magnets (35) are first inserted into axial holes (53) in a round magazine (52) in a ring-like arrangement, and **in that** the round magazine (52) is then positioned above the free end-side connecting sections (43) of the retaining ring (42) in such a way that the axial holes (53) with the permanent magnets (35) come to rest in pairs between the connecting sections (44) of the retaining ring (42).

11. Production method according to Claim 10, **characterized in that** a ring-like die (57) with fingers (58) which are associated with the holes (53) in the round magazine (52) is arranged above the round magazine (52), the permanent magnets (35) being pushed axially out of the holes (53) and into the space between the claw-pole fingers (34) by said fingers (58) until the permanent magnets (35) each lie against the side flank (37) of a claw-pole finger (34) and finally slide against the side of said side flank and, in the process, assume an inclined position in which they are retained by the magnetic ring (51).

12. Production method according to Claim 11, **characterized in that**, after the die (57) and the round magazine (52) are removed, the permanent magnets (35) are interlinked with a shaping die (59) which axially enters the ring magnet (51) of the workpiece support (50) and has a claw-pole-like contour (60) in its end position at the axial sections (43) of the retaining ring (42), and are retained there by the magnetic ring (51).

13. Production method according to Claim 12, **characterized in that** the first subassembly, which is preassembled in this way, together with the magnetic ring (51) is joined to the second subassembly and the second claw pole (28), with the first claw pole (27) being fitted on the rotor shaft (20) of the second subassembly with a firm fit.

14. Production method according to Claim 13, **characterized in that** the second claw pole (28) is fitted on the rotor shaft (20) with a sliding fit, is positioned by the first claw pole (27) and the retaining ring (42), and finally mounted on the rotor shaft (20), preferably caulked to the said rotor shaft.

## Revendications

1. Machine électrique, notamment générateur de courant triphasé pour véhicules automobiles, comprenant un stator (14) qui comporte un enroulement de stator et un rotor à pôles à griffes (15) qui interagit avec celui-ci, comprenant un noyau polaire (17) entouré par un enroulement excitateur (16) et deux pôles à griffes (27, 28) fixés sur un arbre de rotor (20), lesquels possèdent des languettes de pôle à griffes (34) distribuées régulièrement sur leur pourtour et s'engrenant les unes dans les autres en étant espacées dans le sens axial, au moins un aimant permanent (35) étant à chaque fois disposé entre les languettes de pôle à griffes voisines et étant accueilli par un support (36) magnétiquement inerte tout en étant soutenu contre les forces centrifuges, et le support (36) de l'aimant permanent (35) étant constitué d'une bague de maintien (42) réalisée en forme de méandre dont les sections axiales (43) sont respectivement disposées entre deux languettes de pôle à griffes (34) voisines et s'appuient avec leurs côtés longs à chaque fois sur un flanc latéral (37) des languettes de pôle à griffes (34) et dont les sections de liaison (44) relient entre elles deux sections axiales (43) voisines respectivement au niveau de la pointe polaire (40) des languettes de pôle à griffes (34), **caractérisée en ce que** la bague de maintien (42) vient en prise avec les côtés longs de ses sections axiales (43) à chaque fois dans une fente longitudinale (38) sur les flancs latéraux (37) des languettes de pôle à griffes (34).

2. Machine électrique selon la revendication 1, **caractérisée en ce que** les fentes longitudinales (38) sur les flancs latéraux (37) sont reliées entre elles par le biais d'une fente côté frontal (41) sur la pointe polaire (40) des languettes de pôle à griffes (34) dans laquelle vient en prise une baguette (47) façonnée sur la section de liaison (44) de la bague de maintien (42).

3. Machine électrique selon la revendication 1 ou 2, **caractérisée en ce que** les sections axiales (43) sont respectivement dotées d'une cuvette longitudinale (45) dirigée dans le sens radial vers l'extérieur afin d'accroître leur résistance à la flexion.

4. Machine électrique selon l'une des revendications précédentes, **caractérisée en ce que** la bague de maintien (42) est découpée à la matrice, pliée et estampée à partir d'une tôle.

5. Machine électrique selon la revendication 4, **caractérisée en ce que** la bague de maintien (42) est pliée et estampée sous la forme d'une bague ouverte à partir d'une bande de tôle découpée à la matrice.

6. Procédé de fabrication d'une machine électrique, notamment un générateur de courant triphasé pour véhicules automobiles selon le préambule de la revendication 1, **caractérisé en ce qu'**une fente longitudinale (38) est à chaque fois façonnée sur les flancs latéraux (37) des languettes de pôle à griffes (34) et que la bague de maintien (42) réalisée en forme de méandre est enfilée dans le sens de l'axe sur les languettes de pôle à griffes (34) du premier pôle à griffes (27) de telle sorte que les sections axiales (43) sont insérées avec leur côté longitudinal dans les fentes longitudinales (38), que les aimants permanents (35) sont ainsi introduits dans les sections axiales (43) de la bague de maintien (42) de manière à obtenir un premier sous-ensemble sur lequel vient s'appuyer une extrémité de l'arbre de rotor (20) et que le deuxième pôle à griffes (28) est ensuite introduit avec ses languettes de pôle à griffes (34) entre les languettes de pôle à griffes (34) du premier pôle à griffes (27) de telle sorte que la bague de maintien (42) est ainsi également enfilée sur les languettes de pôle à griffes (34) du deuxième pôle à griffes (28) dans le sens de l'axe, **en ce que** les sections axiales (43) de la bague de maintien (42) sont insérées avec leur autre côté longitudinal dans les fentes longitudinales (38) des languettes de pôle à griffes (34) du deuxième pôle à griffes (28).

7. Procédé de fabrication selon la revendication 6, **caractérisé en ce que** l'arbre de rotor (20) est prémonté avec le noyau polaire (17) et l'enroulement excitateur (16) pour former un deuxième sous-ensemble.

8. Procédé de fabrication selon la revendication 7, **caractérisé en ce que** le deuxième pôle à griffes (28) est monté sur l'autre extrémité de l'arbre de rotor (20).

9. Procédé de fabrication selon l'une des revendications 6 à 8, **caractérisé en ce que** le premier pôle à griffes (27) est monté sur un porte-pièce (50) qui possède une bague magnétique (42) entourant les languettes de pôle à griffes (34) et la bague de maintien (42) par l'extérieur, laquelle est partiellement magnétisée dans la zone des sections axiales (43) de la bague de maintien (42).

10. Procédé de fabrication selon la revendication 9, **caractérisé en ce que** les aimants permanents (35) sont tout d'abord insérés selon une disposition en anneau dans des trous axiaux (53) d'un chargeur circulaire (52) et que le chargeur circulaire (52) est ensuite positionné au-dessus des sections de liaison (43) côté frontal libres de la bague de maintien (42) de telle sorte que les trous axiaux (53) munis des aimants permanents (35) viennent reposer par paires entre les sections de liaison (44) de la bague de maintien (42).

11. Procédé de fabrication selon la revendication 10, **caractérisé en ce qu'**au-dessus du chargeur circulaire (52) est disposé un poinçon annulaire (57) muni de languettes (58) associées aux trous (53) du chargeur circulaire (52) avec lequel les aimants permanents (35) sont glissés dans le sens axial hors des trous (53) dans l'espace entre les languettes de pôle à griffes (34) jusqu'à ce que les aimants permanents (35) reposent respectivement sur le flanc latéral (37) d'une languette de pôle à griffes (34) et glissent finalement latéralement sur celle-ci en adoptant ainsi une position oblique dans laquelle ils sont maintenus par la bague magnétique (51).

12. Procédé de fabrication selon la revendication 11, **caractérisé en ce qu'**après avoir retiré le poinçon (57) et le chargeur circulaire (52), les aimants permanents (35) sont restreints dans leur position finale contre les sections axiales (43) de la bague de maintien (42) par un poinçon façonné (59) qui plonge dans le sens axial dans les aimants annulaires (51) du porte-pièce (50) et qui présente un contour en forme de pôle à griffes (60) et y sont maintenus par la bague magnétique (51).

13. Procédé de fabrication selon la revendication 12, **caractérisé en ce que** le premier sous-ensemble ainsi prémonté, accompagné de la bague magnétique (51), est assemblé avec le deuxième sous-ensemble et le deuxième pôle à griffes (28), le premier pôle à griffes (27) étant déposé avec un siège fixe sur l'arbre de rotor (20) du deuxième sous-ensemble.

14. Procédé de fabrication selon la revendication 13, **caractérisé en ce que** le deuxième pôle à griffes (28) est déposé avec un siège coulissant sur l'arbre de rotor (20), positionné par le premier pôle à griffes (27) et la bague de maintien (42) et finalement fixé sur l'arbre de rotor (20), de préférence maté avec lui.
